# EUROPÄISCHE PATENTSCHRIFT

(11) **EP 1 630 022 B1**
(45) Veröffentlichungstag und Bekanntmachung des Hinweises auf die Patenterteilung: **09.01.2008**
(21) Anmeldenummer: 05014974.9
(22) Anmeldetag: 11.07.2005
(51) Int. Cl.: B60J 7/20

(54) **Cabriolet-Fahrzeug mit Verkleidungsteilen**
Cabriolet vehicle with cover flaps
Cabriolet avec des volets de fermeture

(30) Priorität: 27.08.2004 DE 102004041538
(43) Veröffentlichungstag der Anmeldung: 01.03.2006
(73) Patentinhaber: Wilhelm Karmann GmbH, 49084 Osnabrück (DE)
(72) Erfinder: Rußke, Klaus, 49143 Bissendorf (DE)

(56) Entgegenhaltungen:
- EP-A- 1 038 710
- DE-A1- 10 158 058
- US-B1- 6 682 149

## Beschreibung

Die Erfindung betrifft ein Cabriolet-Fahrzeug mit einem bei seiner Öffnung zumindest im wesentlichen unterhalb einer Eintrittsöffnung in der Karosserie ablegbaren Dach, wobei zumindest ein quer außen gelegener Teil der Eintrittsöffnung teilweise durch Verkleidungsteile abdeckbar ist, nach dem Oberbegriff des Anspruchs 1.

Es ist üblich, zumindest solche Verkleidungsteile, die auch bei geschlossenem Dach in ihrer Freigabestellung verbleiben, zum Erreichen dieser Freigabestellung aus einer bündig mit umgebenden Außenflächen liegenden Abdeckstellung abzusenken und sie unterhalb von Außenflächen optisch zu verbergen, um die Eintrittsöffnung möglichst vollständig freizugeben und dadurch beispielweise in quer außen liegenden Bereichen den Durchtritt seitlicher Gestängeteile des Daches zu ermöglichen, siehe z.B. die US 6,682,149 B1.

Auch die DE 198 13 290 A1 zeigt eine mehrteilige und vollständige Verkleidung der Eintrittsöffnung, bei der quer außen liegende Verkleidungsteile an ein bezüglich der Fahrzeugquererstreckung Mittelteil angehängt sind und gegenüber diesem zu ihrer Öffnung vertikal aufwärts schwenkbar sind.

In dieser Stellung sind sie mitsamt dem Mittelteil abwärts in die Karosserie verlagerbar. Dazu wird der Mittelteil um eine Fahrzeugquerachse abwärts verschwenkt, die außen liegenden Verkleidungsteile werden in der gegenüber dem Mittelteil aufgestellten Lage mit abwärts verlagert, so daß sie dann entgegen der Fahrtrichtung nach hinten in Fahrzeuglängsrichtung weisen. Dieses ist für eine Optimierung des verbleibenden Kofferraumvolumens hinderlich. Zudem erfordert eine solche Konstruktion das Vorsehen einer Verkleidung des mittleren Bereichs, so daß die quer außen liegenden Verkleidungsteile daran angehängt werden können. Außerdem sind im Bereich oberhalb von seitlichen Gestängeteilen des abgelegten Daches weitere Verkleidungsteile erforderlich. Im Zuge einer Vereinfachung und Gewichtsersparnis und einer Optimierung des Kofferraumvolumens wird häufig ein Verzicht auf eine Verkleidung im mittleren Bereich gefordert, insbesondere dann, wenn das Dach selbst mit seinem bei geschlossenem Dach an den Windschutzscheibenrahmen anschließenden vorderen Bereich im abgelegten Zustand ungewendet verbleibt und die Eintrittsöffnung im wesentlichen ausfüllt. Aufgrund des Abfallens des bombierten Daches zu den Seiten sind dennoch dort und/oder weiter vorne oberhalb der abgelegten Gestängeteile des Daches häufig Verkleidungsteile erwünscht.

Der Erfindung liegt das Problem zugrunde, bei einem gattungsgemäßen Cabriolet-Fahrzeug eine möglichst platzsparende Halterung von quer außen liegenden Verkleidungsteilen in freigebender Stellung zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 13 angegeben.

Dadurch, daß erfindungsgemäß Verkleidungsteile jeweils einzeln oder gemeinsam über eine eigene Bewegungsmechanik an der Karosserie gehalten sind, ist ein mittlerer Verkleidungsteil entbehrlich. Somit können auch nur die quer außen liegenden Randbereiche von Verkleidungen beeinflußbar sein; mit der erfindungsgemäßen Ausbildung, diese in freigebender Stellung in einer gegenüber ihrer abdeckenden Stellung zumindest teilweise in Richtung einer vertikalen Fahrzeuglängsmittelebene verlagerten, hochkant gestellten und quer zum Fahrzeug erstreckten Lage unterhalb der Ebene der Eintrittsöffnung zu halten, ist eine Optimierung des Kofferraums bei gleichzeitig maximal zur Verfügung gestelltem Bewegungsraum für das Dach erreicht. Quer zum Fahrzeug muß dabei keinen Winkel von 90° zur Längsachse bedeuten, sondern insbesondere eine platzsparende Anpassung an den Verlauf einer den Insassenraum begrenzenden Rückwand.

Sofern die Verkleidungsteile in freigebender Stellung aus einer hochkant gestellten Zwischenstellung einwärts verschwenkt sind, kann die Bewegungsmechanik für die Verlagerung der Verkleidungsteile sehr einfach und flach an einer Rückwand des Insassenraums anliegend angeordnet werden. Insbesondere können die Verkleidungsteile dann bei abgelegtem Dach ausgeschwenkt werden, ohne mit der Dachspitze zu kollidieren, selbst wenn die Dachspitze bis dicht an die zunächst noch in Freigabestellung liegenden Verkleidungsteile heranreicht. Dies erlaubt eine sehr günstige, weit nach vorne gerückte Ablageposition für das Dach und ist daher ein besonderer Vorteil der Erfindung.

In der Zwischenstellung kann das Verkleidungsteil jeweils günstig so stehen, daß es zwischen dieser und der abdeckenden Stellung um eine quer zum Fahrzeug liegende Achse schwenkbar ist, so daß diese einfach an der auch die Einschwenkbewegung zur Fahrzeugmitte hin bewirkenden Bewegungsmechanik mitbeweglich angeordnet sein kann. Das Verkleidungsteil muß nicht übergeben werden; die Gefahr eines Verkantens ist vermieden.

Eine Verlagerbarkeit der Verkleidungsteile zwischen der Zwischenstellung und der freigebenden Stellung mittels eines Viergelenkes ermöglicht, daß die Verkleidungsteile einerseits in Abdeckstellung weit außen angeordnet sein können, andererseits jedoch in Freigabestellung nicht zu weit zur Fahrzeugmitte ragen. Dadurch ist die Erfindung auch bei relativ schmalen Fahrzeugen zu verwirklichen, ohne daß sich einander gegenüber liegende Verkleidungsteile überschneiden müssen. Dennoch ist auch eine hintereinander gestaffelte Lage von zwei eingeschwenkten Verkleidungsteilen im mittleren Fahrzeugbereich möglich.

Anders als in den Ausführungsbeispielen gezeigt, können die Verkleidungsteile von der Zwischenstellung aus auch nach hinten schwenken und dann einen weiter heckwärts gelegenen Bereich abdekken.

Insbesondere können die das jeweilige Verkleidungsteil bewegenden Gestänge platzsparend ohne Zwischenschaltung weiterer Verkleidungsteile mit einer den Insassenraum begrenzenden Rückwand der Karosserie verbunden sein. Dann ergibt sich ein beanspruchter Bauraum von sehr geringer Tiefe in Fahrzeuglängsrichtung.

Die Verkleidungsteile können weiter besonders günstig in freigebender Stellung in zumindest einer parallel zu einer den Insassenraum rückseitig begrenzenden Rückwand gehaltenen Aufnahmebox liegen. Dadurch sind sie geschützt gehalten, wodurch auch in den Kofferraum eingeschobene Gepäckstücke die Verkleidungsteile und Gestänge nicht schädigen können. Insbesondere ist dann eine modulare Ausbildung derart möglich, daß die Aufnahmeboxen das Bewegungsgestänge enthalten und komplett an die Rückwand anmontiert werden können. Auch können in den Aufnahmeboxen eventuelle Elektromotore für die Bewegung der Verkleidungsteile geschützt mit angeordnet sein.

Eine zusätzliche Funktionserweiterung zur Sicherung des abgelegten Daches ergibt sich, wenn der Bewegungsmechanik für die Verlagerung des Verkleidungsteils aus der freigebenden Stellung in die Zwischenstellung ein auf seitliche Gestängeteile des abgelegten Daches einwirkender Niederhalter zugeordnet ist.

Falls bei geöffnetem Dach das vordere, bei geschlossenem Dach mit einem Windschutzscheibenrahmen verbundene Dachende in gleicher Orientierung abgelegt ist und seine bei geschlossenem Dach nach oben weisende Seite eine optische Abschlußfläche für einen wesentlichen Teil des mittleren Bereichs der Eintrittsöffnung ausbildet, fällt dieses Dachende zu seinen Querseiten hin bei üblicher Fahrzeuggestaltung ab, so daß gerade in diesen Randbereichen die Verwendung erfindungsgemäßer Verkleidungsteile optisch und mechanisch gut zu verwirklichen ist.

Die Verkleidungsteile können dann bei geöffnetem Dach seitlich und zumindest teilweise oberhalb von seitlichen Rändern des vorderen Dachendes liegen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische, perspektivische und an der vertikalen Längsmittelebene sowie zum Fahrzeugbug und -heck abgebrochene Ansicht des hinteren Fahrzeugbereichs eines erfindungsgemäßen Cabriolet-Fahrzeugs bei in der Karosserie abgelegtem Dach und mit einem in Abdeckstellung liegenden Verkleidungsteil an jeder Querseite,
- Fig. 2: einen Ausschnitt des Fahrzeugs nach Fig. 1 mit in Zwischenstellung befindlichem Verkleidungsteil,
- Fig. 3: eine ähnliche Ansicht wie Fig. 2 während des Einschwenkens des Verkleidungsteils aus der Zwischenstellung in die Freigabestellung,
- Fig. 4: eine ähnliche Ansicht wie Fig. 3 bei in Freigabestellung verschwenktem Verkleidungsteil,
- Fig. 5: eine ähnliche Ansicht wie Fig. 2 eines um einen vorderen Abschnitt erweiterten Verkleidungsteils,

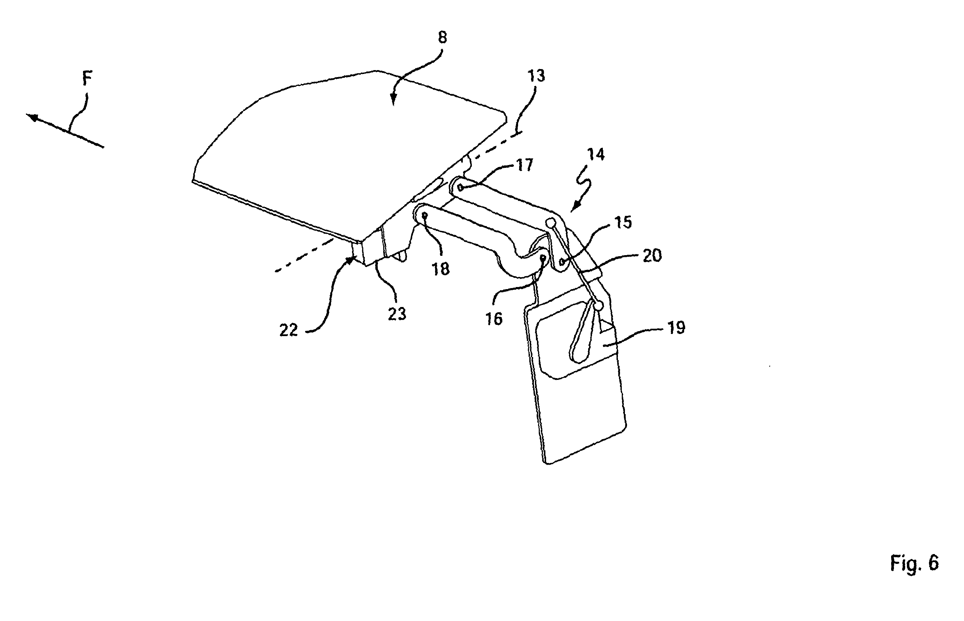

- Fig. 6: eine Einzelteilansicht des Verkleidungsteils und seiner Bewegungsmechanik in Abdeckstellung nach Fig. 1,

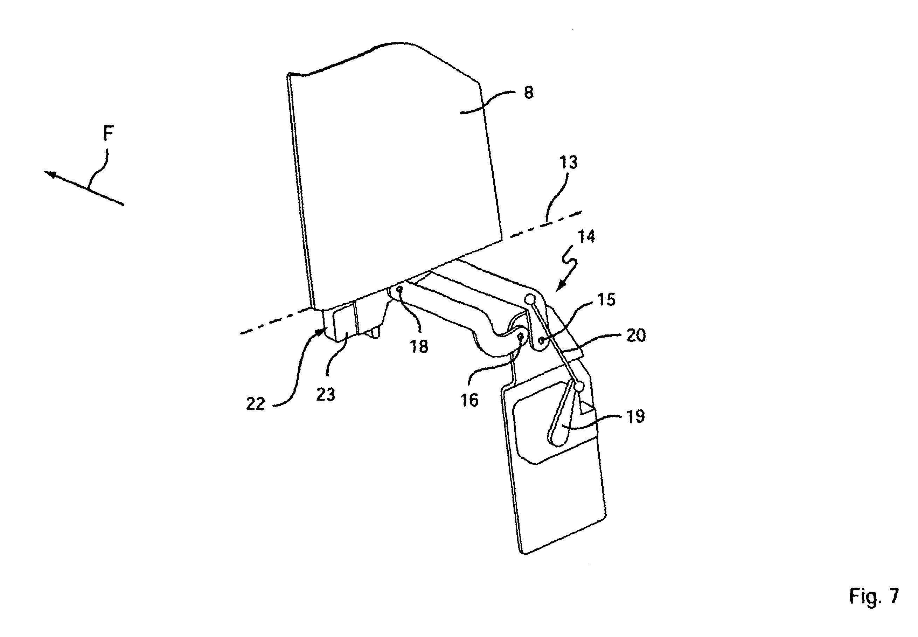

- Fig. 7: eine Einzelteilansicht des Verkleidungsteils und seiner Bewegungsmechanik in Zwischenstellung nach Fig. 2,

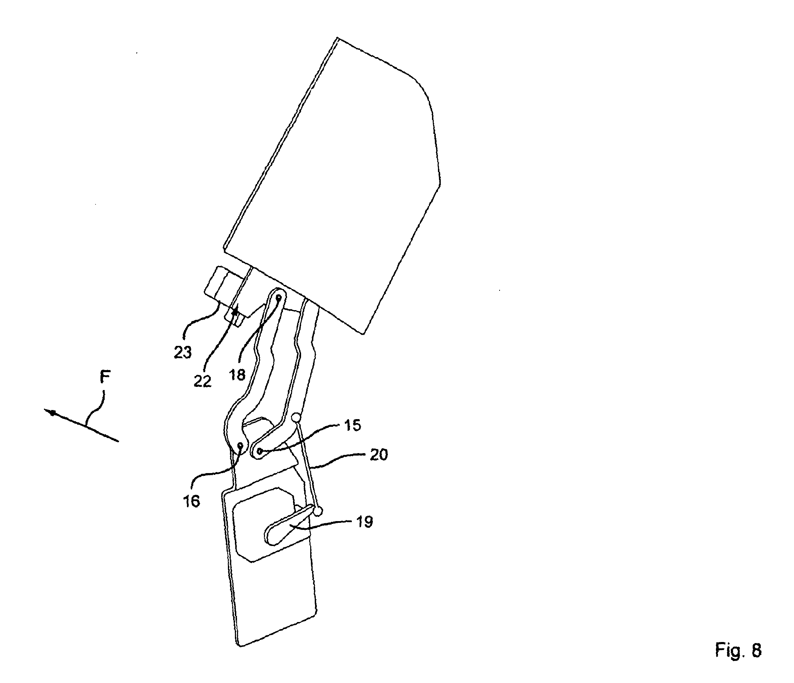

- Fig. 8: eine ähnliche Ansicht wie Fig. 7 während des Einschwenkens des Verkleidungsteils in die Freigabestellung,
- Fig. 9: eine Einzelteilansicht des Verkleidungsteils und seiner Bewegungsmechanik in Freigabestellung nach nach Fig. 4,
- Fig. 10: eine Ansicht des Verkleidungsteils und seiner Bewegungsmechanik in Abdeckstellung nach Fig. 6 mit zusätzlich eingezeichneter Aufnahmebox,
- Fig. 11: eine Ansicht des Verkleidungsteils und seiner Bewegungsmechanik in Zwischenstellung nach Fig. 7 mit zusätzlich eingezeichneter Aufnahmebox,
- Fig. 12: eine Ansicht des Verkleidungsteils und seiner Bewegungsmechanik in Stellung nach Fig. 8 mit zusätzlich eingezeichneter Aufnahmebox,
- Fig. 13: eine Ansicht des Verkleidungsteils und seiner Bewegungsmechanik in Freigabestellung nach Fig. 9 mit zusätzlich eingezeichneter Aufnahmebox,
- Fig. 14: eine ähnliche Ansicht wie Fig. 1 eines alternativen Ausführungsbeispiels mit einem zusätzlichen Niederhalter für das Dachgestänge,
- Fig. 15: das Ausführungsbeispiel nach Fig. 14 in Zwischenstellung des Verkleidungsteils nach Fig. 2,
- Fig. 16: das Ausführungsbeispiel nach Fig. 14 in Bewegungsstellung des Verkleidungsteils nach Fig. 3,
- Fig. 17: das Ausführungsbeispiel nach Fig. 14 in Freigabestellung des Verkleidungsteils nach Fig. 4.

Das erfindungsgemäße Cabriolet-Fahrzeug 1 kann, wie im gezeichneten Ausführungsbeispiel angedeutet, sowohl ein mit einer Rückbank versehenes vier- oder fünfsitziges Fahrzeug als auch ein Zweisitzer sein.

Dabei kann das bewegliche und in geschlossener Stellung mittelbar oder unmittelbar an einen Windschutzscheibenrahmen anschließende Dach 2 separate und mit zumindest jeweils einem starren Rahmen versehene Baueinheiten bildende Dachteile umfassen oder, wie hier dargestellt, ein insgesamt mit einem gemeinsamen Bezug überzogenes Soft-Top bilden. Das Dach 2 kann manuell oder voll- oder teilautomatisch zu bewegen sein.

Das Dach 2 ist zu seiner Öffnung im hinteren Fahrzeugbereich ablegbar. Hierzu ist eine Eintrittsöffnung 3 in die Karosserie 4 vorgesehen. Im vorliegenden Ausführungsbeispiel ist das Dach 2 über eine sog. Z-Faltung in der Karosserie 4 ablegbar, wobei das im geschlossenen Zustand mit einem Windschutzscheibenrahmen verbundene vordere Dachende 5 seine Orientierung im abgelegten Zustand beibehält, also mit der Außenseite 6 auch in abgelegter Stellung nach oben weist.

Dabei fallen die Querränder 7 des vorderen Dachendes 5 aufgrund der bombierten Dachform ab. Wenn der bezüglich der Fahrzeugquerrichtung mittlere Bereich des vorderen Dachendes 5 in etwa in der Ebene der Eintrittsöffnung 3 liegt, ragen daher die Querränder 7 weiter nach unten in die Karosserie 4. Bei geöffnetem Dach 2 kann somit dieses selbst mit seiner nach oben weisenden Seite 6 einen optischen Abschluß für einen wesentlichen Teil des mittleren Bereichs der Eintrittsöffnung 3 ausbilden. Ein übergreifender Deckel oder ähnliches ist dann hier entbehrlich. Aufgrund der abfallenden Querränder 7 ist außen hingegen eine gesonderte optische Abdeckung vorteilhaft.

Es versteht sich, daß je nach Ausbildung der Eintrittsöffnung und der Dachablage auch andere Bereiche durch bewegliche Verkleidungsteile abdeckbar sein können.

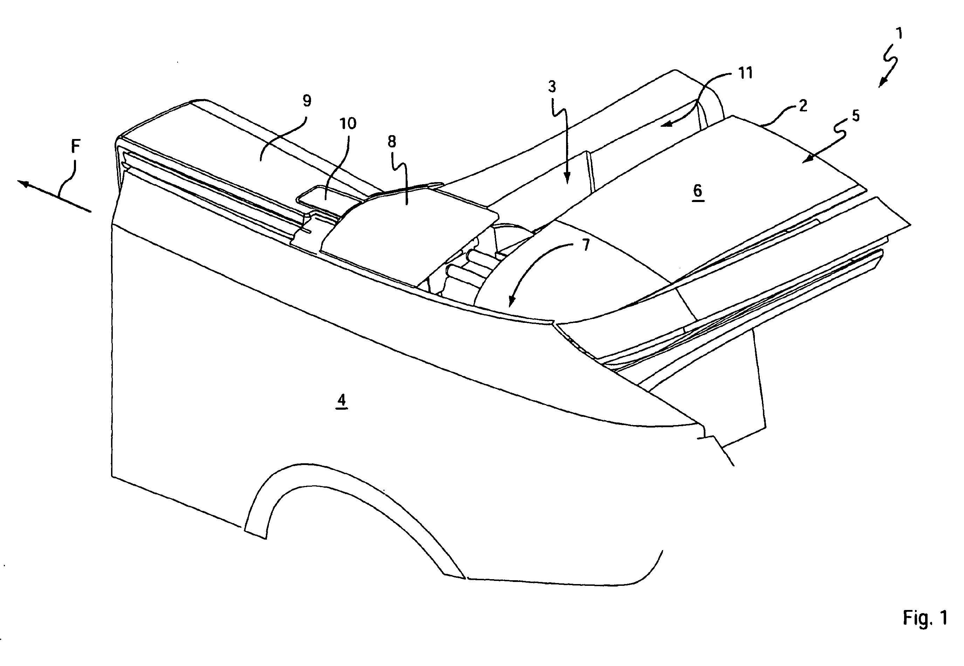

Zur teilweisen Abdeckung der Eintrittsöffnung 3 sind erfindungsgemäß symmetrisch zu einer vertikalen Längsmittelebene liegende und bewegliche Verkleidungsteile 8, 8a vorgesehen, die in den gezeichneten Ausführungsbeispielen bei geöffnetem Dach 2 seitlich und zumindest teilweise oberhalb von seitlichen Rändern 7 des vorderen Dachendes 5 liegen. In Figur 1 ist jeweils ein zur Fahrtrichtung F linkes Verkleidungsteil 8 in abdeckender Stellung schematisch dargestellt. Dabei ist dem Verkleidungsteil 8 ein weiteres, schmaleres Verkleidungsteil 10 vorgeordnet, das in herkömmlicher Weise über eine schräg verlaufende Kulisse in eine Offenstellung unterhalb einer seitlichen Außenverkleidung 9 neben den Rücksitzen verfahrbar ist.

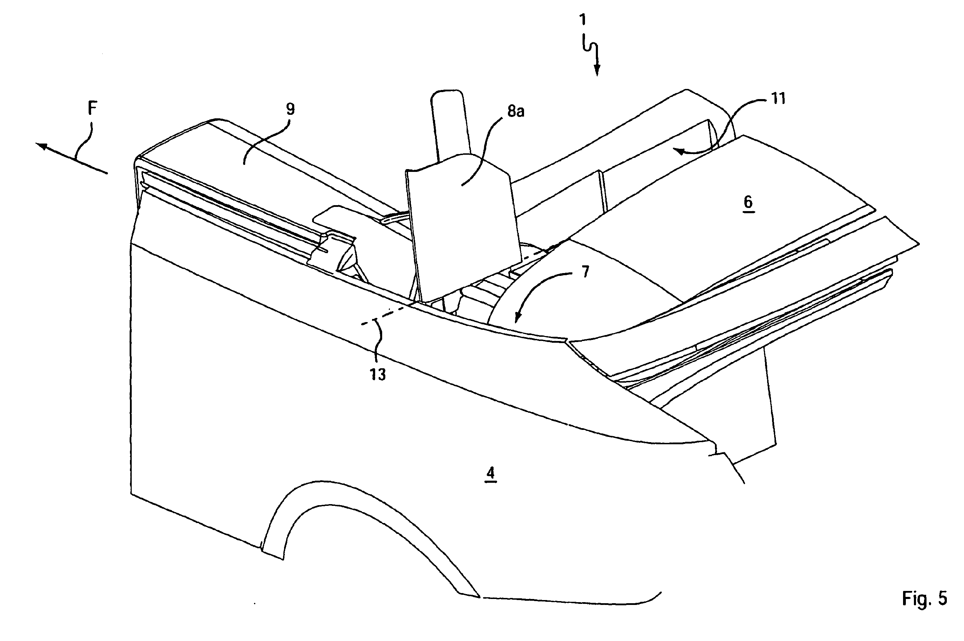

In Fig. 5 ist hingegen eine Ausführung gezeigt, bei der das weitere Verkleidungsteil 10 von dem Verkleidungsteil 8a einstückig umfaßt und mit diesem beweglich ist, was den Fertigungsaufwand erheblich verringert. Die im folgenden für das Verkleidungsteil 8 beschriebenen Stellungen und Bewegungen gelten prinzipiell auch für das vergrößerte Verkleidungsteil 8a.

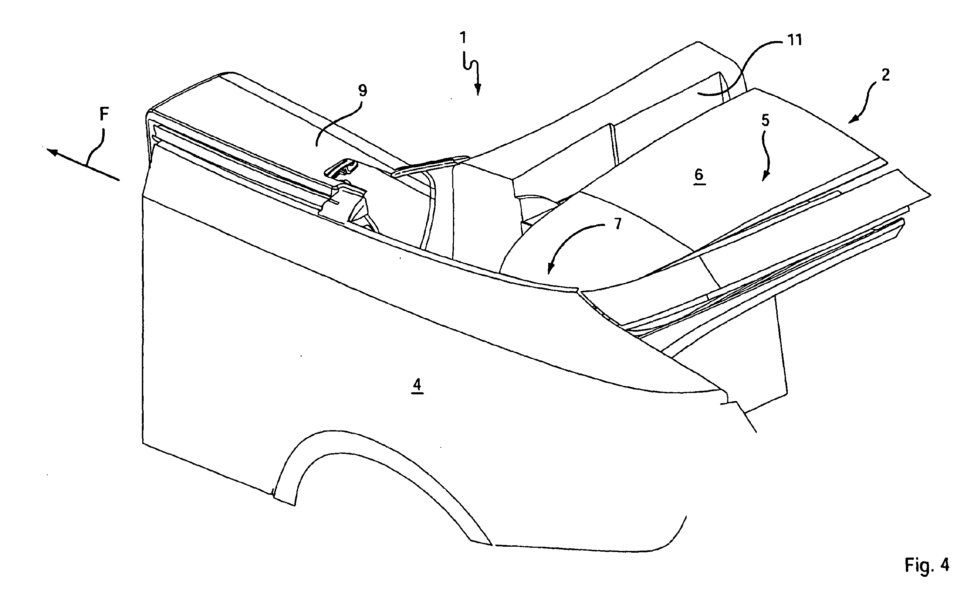

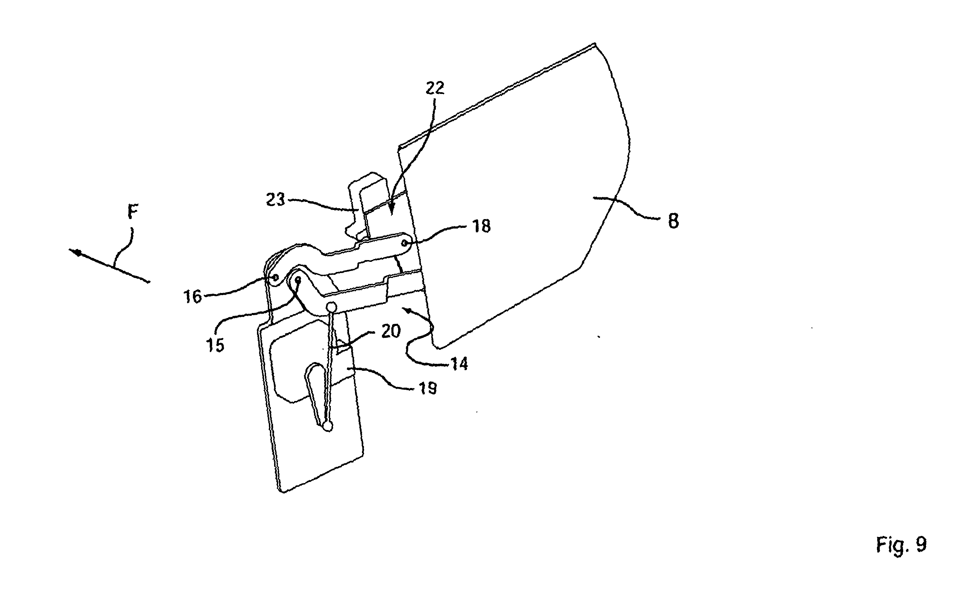

In den Figuren 4 und 9 ist das seitliche Verkleidungsteil 8 in seiner Freigabestellung gezeigt. Es wird deutlich, daß es in dieser Stellung hochkant steht, so daß seine Erstreckungsebene vertikal oder gegen die Vertikale nur um wenige Grad geneigt ist, wobei die Neigung durch die Schrägstellung einer den Insassenraum begrenzenden Rückwand 11 vorgegeben ist. Zudem ist in Freigabestellung das Verkleidungsteil 8 insgesamt unter die (zumeist gekrümmte) Ebene der Eintrittsöffnung 3 abgesenkt und daher von außen bei abgelegtem Dach nicht sichtbar.

Dabei ist das Verkleidungsteil 8 zumindest so weit einwärts in Richtung einer vertikalen Längsmittelebene verlagert, daß seitlich genügend Raum für den Durchtritt von Gestängeteilen 12 des Daches 2 freigegeben ist.

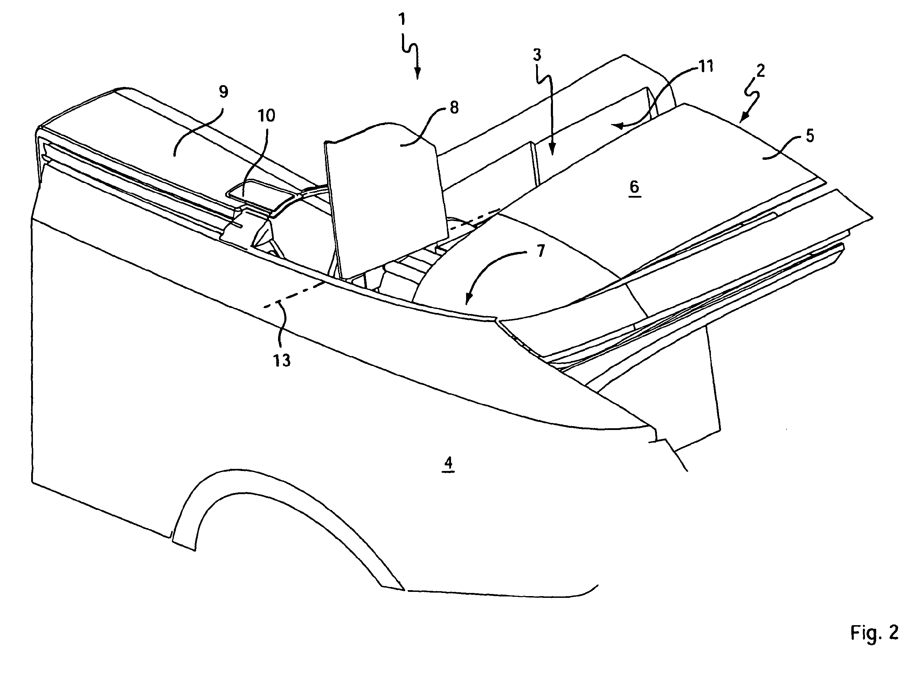

Aus der abdeckenden, im wesentlichen horizontalen Stellung nach Fig. 1 ist das Verkleidungsteil 8 über eine erste Bewegungsmechanik um eine quer zum Fahrzeug 1 gelegene Achse 13 in eine hochkant liegende Zwischenstellung aufwärts verschwenkbar (Fig.2).

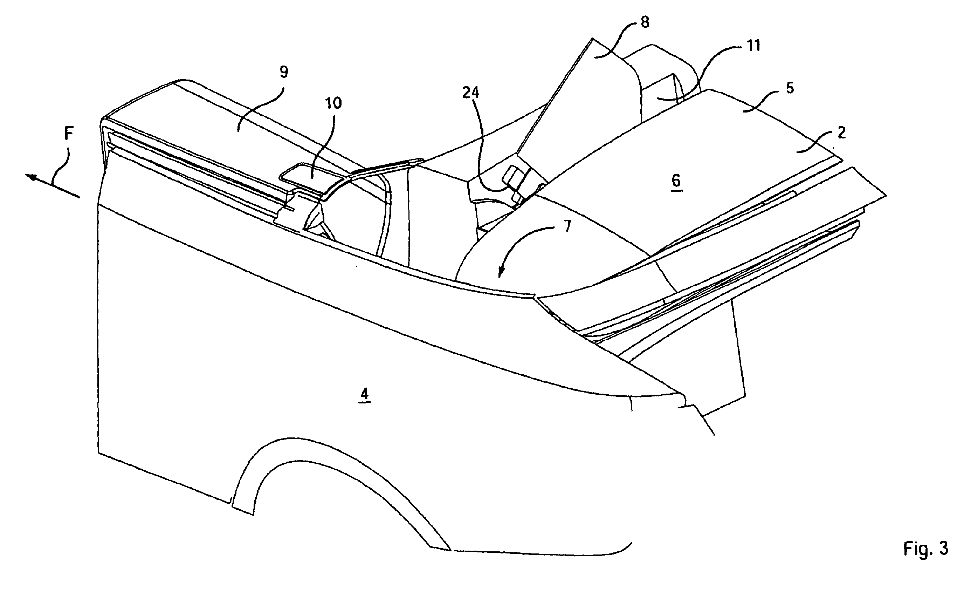

Diese Zwischenstellung ermöglicht das nachfolgende Einwärtsverschwenken (Fig. 3), um die in Fig. 4 gezeigte Freigabestellung zu erreichen. Auch eine überlagerte translatorische und rotatorische Bewegung ist je nach Orientierung der Verkleidungsteile 8 in Freigabestellung (hier zur Mitte hin weisend) möglich. Für das Verschwenken ist eine Gestänge 14 vorgesehen, das hier ein Viergelenk mit zwei karosseriefesten Gelenken 15, 16 und zwei dem Verkleidungsteil 8 zugeordneten, beweglichen Gelenken 17, 18 umfaßt. Auch ein Eingelenk ist alternativ möglich, sofern ein hinreichend großer Schwenkraum zur Verfügung steht. Des weiteren ist dem Gestänge 14 jeweils ein Elektromotor 19 zugeordnet, der über eine Zug-Schub-Stange 20 auf einen der Lenker des Viergelenks 15, 16, 17, 18 einwirkt. Der Antrieb 19 kann über eine entsprechende Kraftumlenkung auch das Schwenken des Verkleidungsteils 8 um die Achse 13 mit bewirken; hierfür kann alternativ auch ein zweiter Antrieb oder eine Zwangsbewegung mit Federkraftunterstützung vorgesehen sein.

Die Schwenkachse 13 ist vorteilhaft gemeinsam mit dem Verkleidungsteil 8 über das Viergelenk 15, 16, 17, 18 ein- und auswärts verschwenkbar, was den konstruktiven Aufwand minimiert.

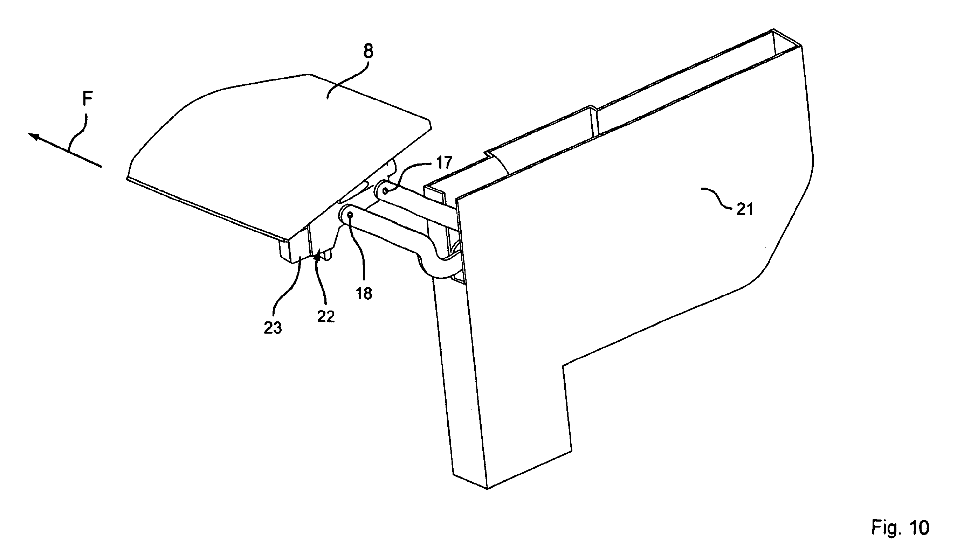

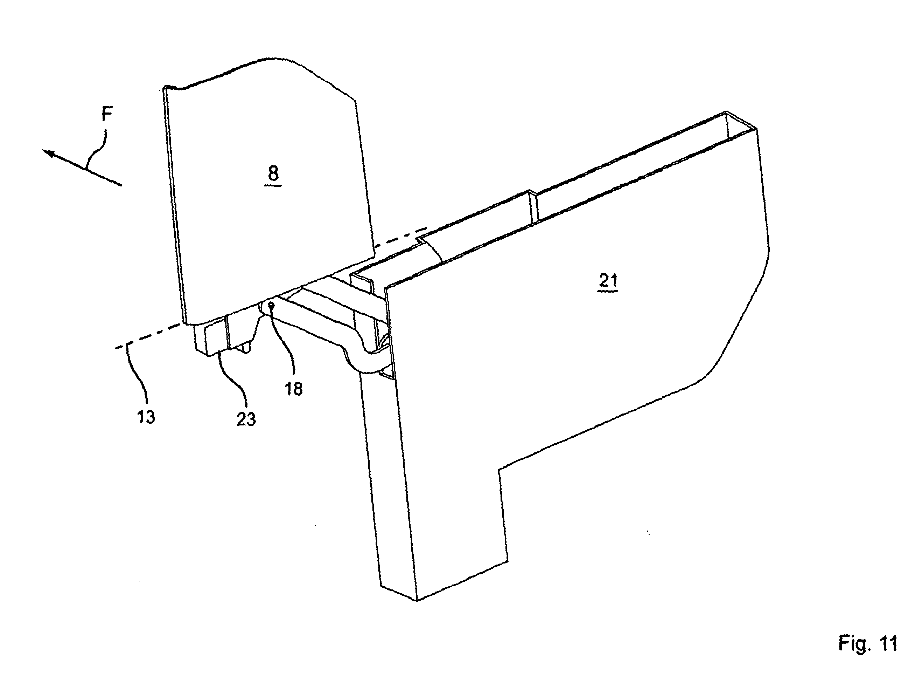

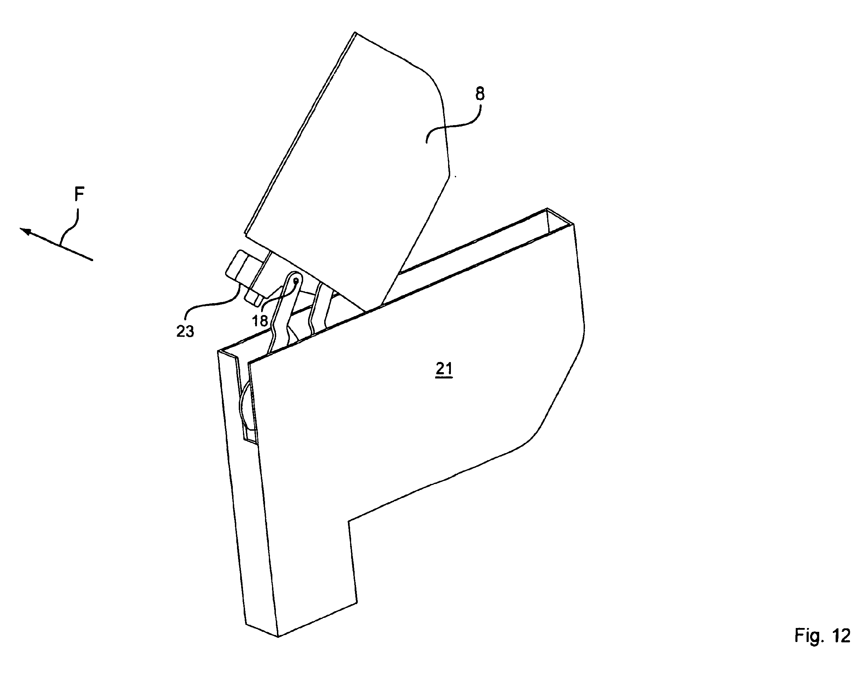

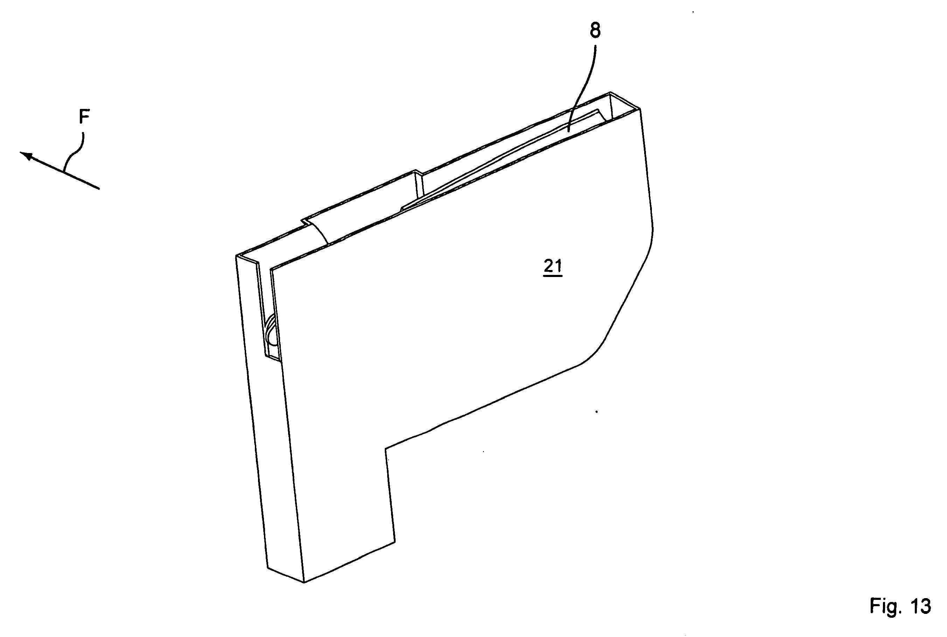

Im Ausführungsbeispiel ist das Verkleidungsteil 8 in Freigabestellung in einer Aufnahmebox 21 gehalten, die hier lediglich in den Figuren 10 bis 13 eingezeichnet ist. Dabei kann - wie hier gezeichnet - jeder Fahrzeugseite eine Aufnahmebox 21 zugeordnet sein, oder es kann für beide Seiten eine gemeinsame, quer über die Rückwand 11 verlaufende Aufnahmebox vorgesehen sein. In jedem Fall ist die rückwärtige Seite der Aufnahmebox 21 so stabil ausgebildet, daß sie von herangeschobenen Gepäckstücken nicht eingedrückt wird.

Es ist des weiteren günstig, wenn jede Aufnahmebox nur so weit bis an die Fahrzeuglängsmittelebene heranreicht, daß dort ein Durchgangsraum, etwa für einen Skisack, verbleibt. Dies ist auch dann möglich, wenn das Verkleidungsteil 8a vergrößert ausgebildet ist. Die Aufnahmebox ist dann gegebenenfalls abgestuft. Auch eine durchgehende Aufnahmebox kann im mittleren Bereich einen Durchgangsraum aufweisen. Sofern die Verkleidungsteile 8, 8a in eingeschwenkter Stellung bis über die vertikale Längsmittelebene hinausragen, können sie in dieser Stellung gestaffelt hintereinander liegen. Dies kann mittels unterschiedlicher Gestänge 14 des jeweiligen Verkleidungsteils 8 bewirkbar sein.

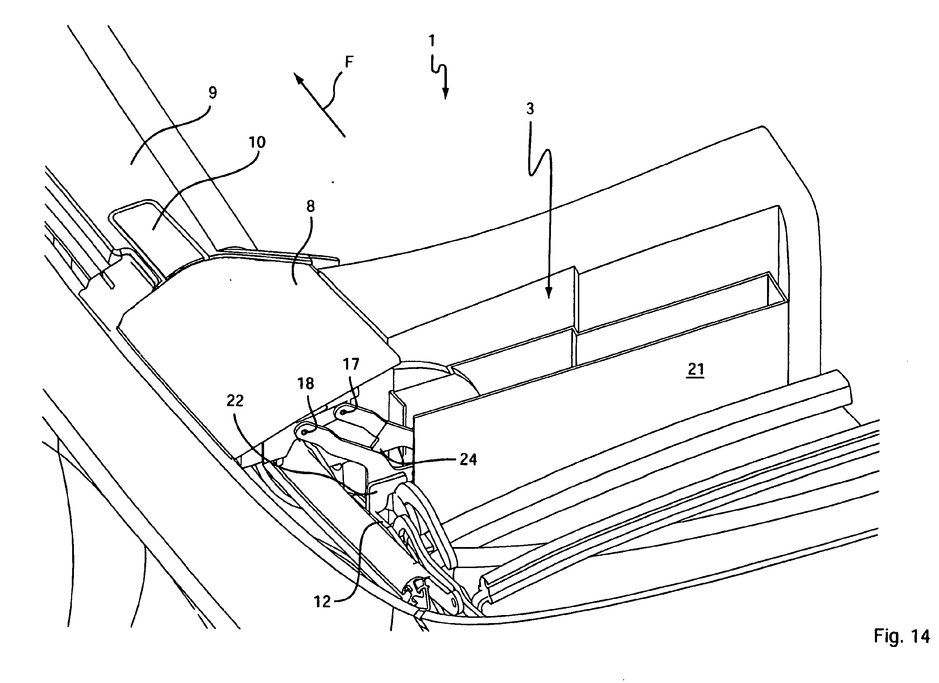

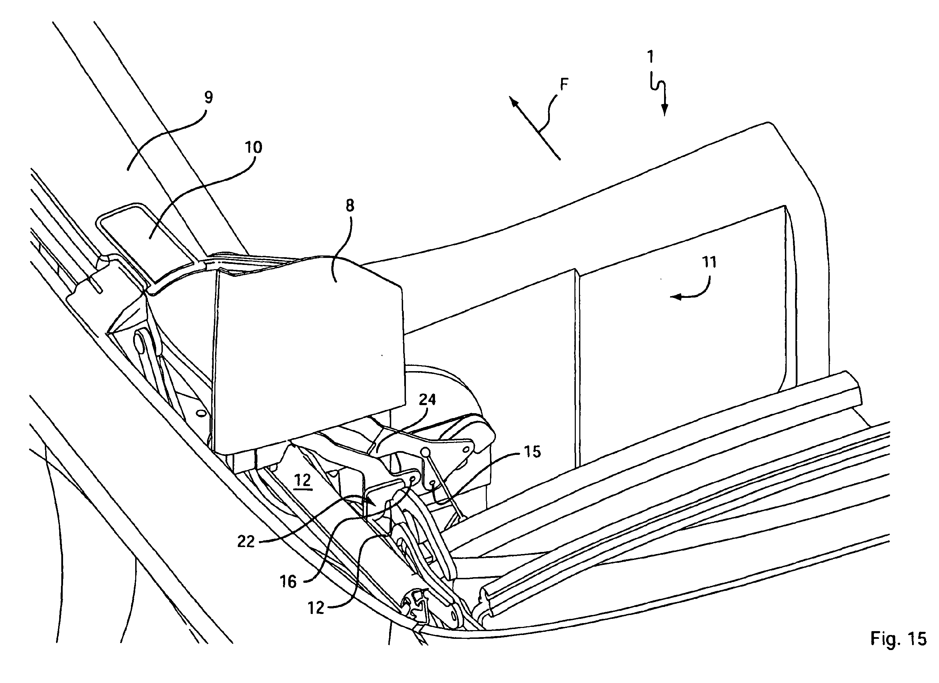

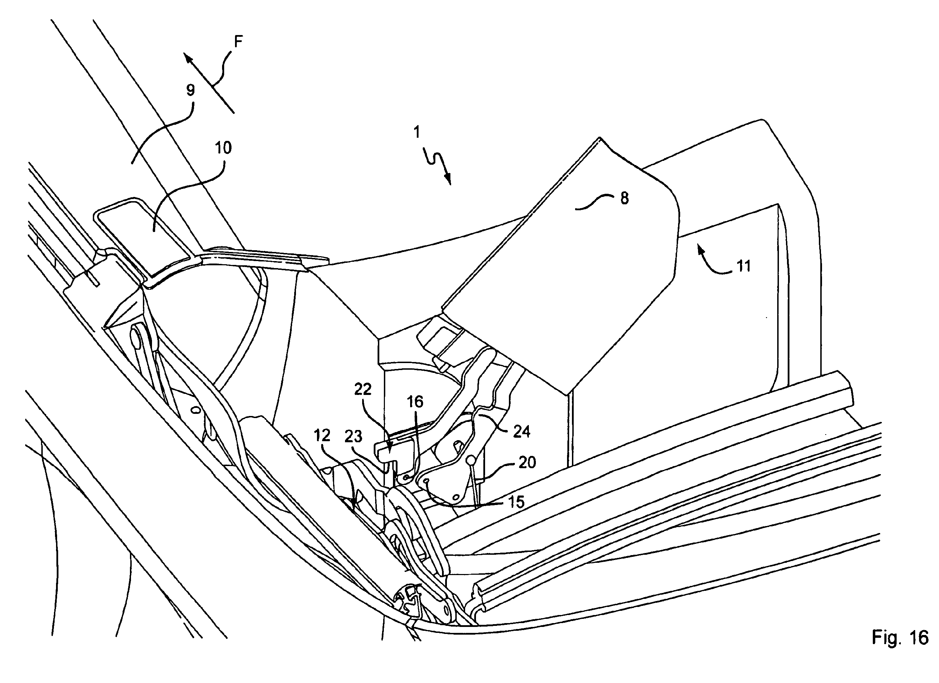

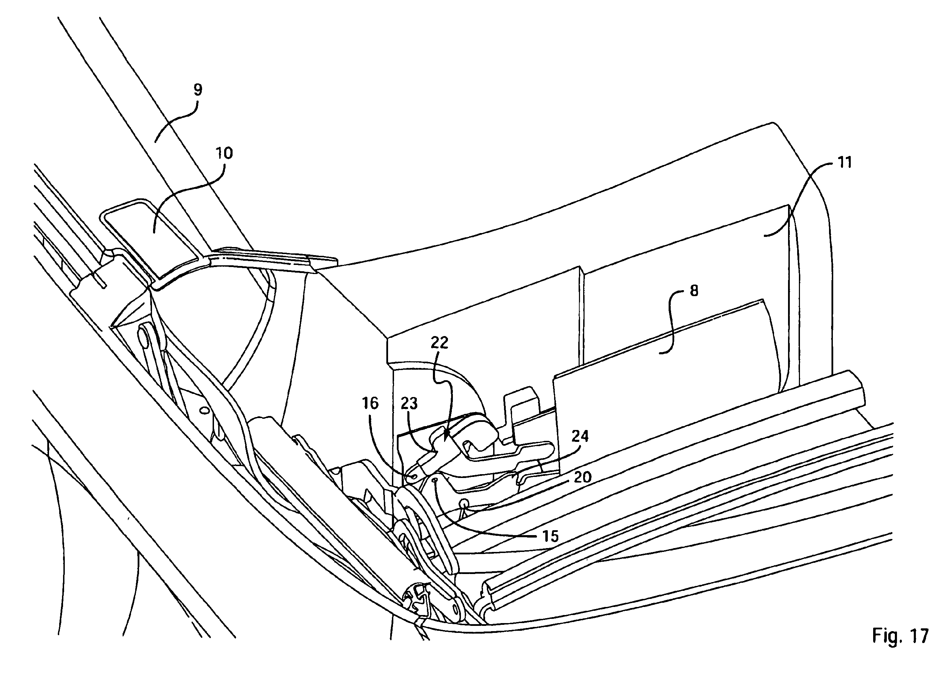

Des weiteren kann, wie in den Figuren 14 bis 17 dargestellt ist, der das Gestänge 14 umfassenden Bewegungsmechanik für die Verlagerung des Verkleidungsteils 8 aus der freigebenden Stellung in die zwischenstellung ein auf seitliche Gestängeteile 12 des abgelegten Daches 2 einwirkender Niederhalter 22 zugeordnet sein. Dieser ist mit dem Viergelenk 15, 16, 17, 18 schwenkbar und umfaßt eine auf die Gestängeteile 12 von oben aufschwenkbares Druckstück 23 an dem äußeren der Hebel des Viergelenkes. Dadurch sichert der Niederhalter 22 sowohl in Zwischenstellung als auch in Abdeckstellung des Verkleidungsteils 8 das abgelegte Dach 2 gegen Bewegungen. Das Druckstück 23 kann eine elastisch deformierbarer Oberfläche aufweisen.

Gleichzeitig kann der äußere Hebel des Viergelenkes 15, 16, 17, 18 über einen Kraftvermittler 24 von dem inneren Hebel niedergehalten werden, wodurch sich das Viergelenk auch dann sichert, wenn der Antrieb 19 dem näher an der Längsmittelebene angeordneten Hebel des Viergelenkes zugeordnet ist. Der Kraftvermittler 24 kann einfach als Anformung an dem inneren Hebel ausgebildet sein, die in Zwischen- oder Abdeckstellung auf den äußeren Hebel aufdrückt. Eine aufwärts gerichtete Kraft auf den Niederhalter 22 wird dann über den blockierten Antrieb 19 aufgefangen.

In den Ausführungsbeispielen sind die Verkleidungsteile 8, 8a sowohl bei geschlossenem Dach 2 als auch während der Dachbewegung in Freigabestellung und nur bei geöffnetem Dach 2 in Abdeckstellung. Abweichend hierzu, kann es auch möglich sein, ein Verkleidungsteil auch bei vollständig geschlossenem Dach in Abdeckstellung zu halten.

## Patentansprüche

1. Cabriolet-Fahrzeug (1) mit einem zumindest im wesentlichen unterhalb einer Eintrittsöffnung (3) in der Karosserie (4) ablegbaren Dach (2), wobei quer außen gelegene Bereiche der Eintrittsöffnung (3) bei abgelegtem Dach (2) zumindest teilweise durch zwischen einer abdeckenden und einer freigebenden Stellung bewegliche Verkleidungsteile (8;8a) abdeckbar sind,
**dadurch gekennzeichnet,**
**daß** Verkleidungsteile (8;8a) über eine eigene Bewegungsmechanik an der Karosserie (4) derart gehalten sind, daß sie in freigebender Stellung in einer gegenüber ihrer abdeckenden Stellung zumindest teilweise in Richtung einer vertikalen Fahrzeuglängsmittelebene verlagerten, hochkant gestellten und quer zum Fahrzeug (1) erstreckten Lage unterhalb der Ebene der Eintrittsöffnung (3) gehalten sind.

2. Cabriolet-Fahrzeug (1) nach Anspruch 1
**dadurch gekennzeichnet,**
**daß** die verkleidungsteile (8;8a) in freigebender Stellung aus einer hochkant gestellten Zwischenstellung einwärts verschwenkt sind.

3. Cabriolet-Fahrzeug (1) nach einem der Ansprüche 1 oder 2,
**dadurch gekennzeichnet,**
**daß** Verkleidungsteile (8;8a) zwischen der abdeckenden Stellung und der Zwischenstellung um eine quer zum Fahrzeug (1) liegende Achse (13) schwenkbar sind.

4. Cabriolet-Fahrzeug (1) nach einem der Ansprüche 1 bis 3,
**dadurch gekennzeichnet,**
**daß** Verkleidungsteile (8;8a) zwischen der Zwischenstellung und der freigebenden Stellung jeweils mittels eines Viergelenkes (15;16;17;18) verlagerbar sind.

5. Cabriolet-Fahrzeug (1) nach einem der Ansprüche 1 bis 4,
**dadurch gekennzeichnet,**
**daß** Verkleidungsteile (8;8a) jeweils an einem Gestänge (14) gehalten sind, das sowohl die Bewegungsmechanik für die Verlagerung zwischen der Zwischenstellung und der freigebenden Stellung als auch die Bewegungsmechanik für die Verlagerung zwischen der Zwischenstellung und der abdeckenden Stellung umfaßt.

6. Cabriolet-Fahrzeug (1) nach Anspruch 5,
**dadurch gekennzeichnet,**
**daß** das Gestänge (14) das jeweilige Verkleidungsteil (8;8a) ohne Zwischenschaltung weiterer Verkleidungsteile mit einer den Insassenraum begrenzenden Rückwand (11) der Karosserie (4) verbindet.

7. Cabriolet-Fahrzeug (1) nach einem der Ansprüche 1 bis 6,
**dadurch gekennzeichnet,**
**daß** Verkleidungsteile (8;8a) in freigebender Stellung in zumindest einer parallel zu einer den Insassenraum rückseitig begrenzenden Rückwand (11) gehaltenen Aufnahmebox (21) aufgenommen sind.

8. Cabriolet-Fahrzeug (1) nach Anspruch 7,
**dadurch gekennzeichnet,**
**daß** die Aufnahmebox (21) für Verkleidungsteile (8;8a)von beiden Fahrzeugseiten durchgehend ausgebildet ist.

9. Cabriolet-Fahrzeug (1) nach Anspruch 8,
**dadurch gekennzeichnet,**
**daß** die Aufnahmebox (21) in ihrem der Fahrzeugmitte zugewandten Bereich einen Durchgangsraum beläßt.

10. Cabriolet-Fahrzeug (1) nach einem der Ansprüche 1 bis 9,
**dadurch gekennzeichnet,**
**daß** der Bewegungsmechanik für die Verlagerung des Verkleidungsteils aus der freigebenden Stellung in die Zwischenstellung ein auf seitliche Gestängeteile (12) des abgelegten Daches (2) einwirkender Niederhalter (22) zugeordnet ist.

11. Cabriolet-Fahrzeug (1) nach Anspruch 10,
**dadurch gekennzeichnet,**
**daß** der Niederhalter (22) ein auf die Gestängeteile (12) von oben aufschwenkbares Druckstück (23) umfaßt.

12. Cabriolet-Fahrzeug (1) nach einem der Ansprüche 1 bis 11,
**dadurch gekennzeichnet,**
**daß** bei geöffnetem Dach (2) das vordere, bei geschlossenem Dach (2) mit einem Windschutzscheibenrahmen verbundene Dachende (5) in gleicher Orientierung abgelegt ist und seine bei geschlossenem Dach nach oben weisende Seite (6) eine optische Abschlußfläche für einen wesentlichen Teil des mittleren Bereichs der Eintrittsöffnung (3) ausbildet.

13. Cabriolet-Fahrzeug (1) nach Anspruch 12,
**dadurch gekennzeichnet,**
**daß** die Verkleidungsteile (8;8a) bei geöffnetem Dach (2) seitlich und zumindest teilweise oberhalb von seitlichen Rändern (7) des vorderen Dachendes (5) liegen.

## Claims

1. A cabriolet vehicle (1) with a roof (2) able to be stored at least substantially underneath an entrance port (3) in the car body (4), whereby transversely externally situated areas of the entrance port (3) are able to be covered, when the roof (2) is stored, at least partially by cladding parts (8; 8a) which can be moved between a covering and an uncovering position,
**characterised in that**
cladding parts (8,8a) are held via particular movement mechanics at the car body (4) such that, in the uncovering position, they are held underneath the plane of the entrance port (3) in a state which, compared to their covering position, is displaced at least partially in the direction of a vertical vehicle longitudinal midplane, set upright and extended transverse to the vehicle (1).

2. The cabriolet vehicle (1) according to Claim 1,
**characterised in that**
the cladding parts (8,8a) are pivoted inwardly into an uncovering position out of an intermediate position set upright.

3. The cabriolet vehicle (1) according to one of Claims 1 or 2,
**characterised in that**
cladding parts (8;8a) are able to pivot between the covering position and the intermediate position around an axis (13) situated transverse to the vehicle (1).

4. The cabriolet vehicle (1) according to one of Claims 1 to 3,
**characterised in that**
cladding parts (8;8a) can be displaced between the intermediate position and the uncovering position in each case by means of a four-bar linkage (15;16;17;18).

5. The cabriolet vehicle (1) according to one of Claims 1 to 4,
**characterised in that**
cladding parts (8; 8a) are each held at a bar (14) which includes both the movement mechanics for the displacement between the intermediate position and the uncovering position and the movement mechanics for the displacement between the intermediate position and the covering position.

6. The cabriolet vehicle (1) according to Claim 5,
**characterised in that**
the bar (14) connects the respective cladding part (8;8a), without interposing further cladding parts, with a car body's (4) rear wall (11) which delimits the space for occupants.

7. The cabriolet vehicle (1) according to one of Claims 1 to 6,
**characterised in that**
cladding parts (8;8a), in the uncovering position, are received in at least one receiving box (21) held parallel to a rear wall (11) which delimits to the rear the space for occupants.

8. The cabriolet vehicle (1) according to Claim 7,
**characterised in that**
the receiving box (21) for cladding parts (8;8a) is continuously configured by both vehicle sides.

9. The cabriolet vehicle (1) according to Claim 8,
**characterised in that**
the receiving box (21) leaves a passage space in its area facing the middle of the vehicle.

10. The cabriolet vehicle (1) according to one of Claims 1 to 9,
**characterised in that**
a hold-down device (22) which acts on lateral bar parts (12) of the stored roof (2) is allocated to the movement mechanics for the displacement of the cladding part out of the uncovering position into the intermediate position.

11. The cabriolet vehicle (1) according to Claim 10,
**characterised in that**
the hold-down device (22) includes a pressure piece (23) which can be pivoted from above onto the bar parts (12).

12. The cabriolet vehicle (1) according to one of Claims 1 to 11,
**characterised in that**
in the case of an open roof (2), the front roof end (5) which is connected with a windscreen frame when the roof (2) is closed is stored in the same orientation and its side (6) which points upwards when the roof is closed configures an optic finishing surface for a substantial part of the middle area of the entrance port (3).

13. The cabriolet vehicle (1) according to Claim 12,
**characterised in that**
the cladding parts (8;8a) are situated, in the case of an open roof (2), laterally and at least partially above lateral edges (7) of the front roof end (5).

## Revendications

1. Véhicule cabriolet (1) avec un toit (2) pouvant être rangé au moins substantiellement en dessous d'une ouverture d'entrée (3) dans la carrosserie (4), des parties de l'ouverture d'entrée (3) situées transversalement à l'extérieur, lorsque le toit (2) est rangé, pouvant être recouvertes au moins en partie par des parties d'habillage (8 ; 8a) mobiles entre une position de recouvrement et une position de libération,
**caractérisé en ce que**
les parties d'habillage (8 ; 8a) sont fixées à la carrosserie (4) par le biais d'un mécanisme de déplacement propre de telle sorte que dans la position de libération, elles soient maintenues en dessous du plan de l'ouverture d'entrée (3) dans une position au moins partiellement décalée dans la direction d'un plan médian vertical longitudinal du véhicule par rapport à leur position de recouvrement, disposée de chant et s'étendant transversalement au véhicule (1).

2. Véhicule cabriolet (1) selon la revendication 1,
**caractérisé en ce que**
les parties d'habillage (8 ; 8a), dans la position de libération, sont pivotées vers l'intérieur depuis une position intermédiaire disposée de chant.

3. Véhicule cabriolet (1) selon l'une quelconque des revendications 1 ou 2,
**caractérisé en ce que**
les parties d'habillage (8 ; 8a) peuvent pivoter entre la position de recouvrement et la position intermédiaire autour d'un axe (13) situé transversalement au véhicule (1).

4. Véhicule cabriolet (1) selon l'une quelconque des revendications 1 à 3,
**caractérisé en ce que**
les parties d'habillage (8 ; 8a) peuvent être déplacées entre la position intermédiaire et la position de libération, à chaque fois au moyen d'un quadrilatère articulé (15 ; 16 ; 17 ; 18).

5. Véhicule cabriolet (1) selon l'une quelconque des revendications 1 à 4,
**caractérisé en ce que**
les parties d'habillage (8 ; 8a) sont maintenues à chaque fois sur une tringlerie (14) qui comprend à la fois le mécanisme de déplacement pour le déplacement entre la position intermédiaire et la position de libération ainsi que le mécanisme de déplacement pour le déplacement entre la position intermédiaire et la position de recouvrement.

6. Véhicule cabriolet (1) selon la revendication 5,
**caractérisé en ce que**
la tringlerie (14) relie la partie d'habillage respective (8 ; 8a) sans montage intermédiaire d'autres parties d'habillage, à une paroi arrière (11) de la carrosserie (4) délimitant l'habitacle des passagers.

7. Véhicule cabriolet (1) selon l'une quelconque des revendications 1 à 6,
**caractérisé en ce que**
des parties d'habillage (8 ; 8a) dans la position de libération sont reçues dans au moins une boîte de réception (21) maintenue parallèlement à une paroi arrière (11) délimitant l'habitacle des passagers du côté arrière.

8. Véhicule cabriolet (1) selon la revendication 7,
**caractérisé en ce que**
la boîte de réception (21) pour les parties d'habillage (8 ; 8a) est réalisée sous forme continue depuis les deux côtés du véhicule.

9. Véhicule cabriolet (1) selon la revendication 8,
**caractérisé en ce que**
la boîte de réception (21) laisse un espace de passage dans sa région tournée vers le milieu du véhicule.

10. Véhicule cabriolet (1) selon l'une quelconque des revendications 1 à 9,
**caractérisé en ce que**
l'on associe au mécanisme de déplacement pour le déplacement de la partie d'habillage de la position de libération dans la position intermédiaire un dispositif de maintien vers le bas (22) agissant sur des parties latérales (12) de la tringlerie du toit (2) rangé.

11. Véhicule cabriolet (1) selon la revendication 10,
**caractérisé en ce que**
le dispositif de maintien vers le bas (22) comprend une pièce de pression (23) pouvant s'ouvrir par pivotement depuis le haut sur les parties (12) de la tringlerie.

12. Véhicule cabriolet (1) selon l'une quelconque des revendications 1 à 11,
**caractérisé en ce que**
lorsque le toit (2) est ouvert, l'extrémité avant du toit (5) connectée à un cadre de pare-brise lorsque le toit (2) est fermé, est rangée dans la même orientation et son côté (6) tourné vers le haut lorsque le toit est fermé constitue une surface de fermeture optique pour une partie substantielle de la région centrale de l'ouverture d'entrée (3).

13. Véhicule cabriolet (1) selon la revendication 12,
**caractérisé en ce que**
les parties d'habillage (8 ; 8a) se situent latéralement et au moins en partie au-dessus des bords latéraux (7) de l'extrémité avant du toit (5) lorsque le toit (2) est ouvert.
